# EUROPEAN PATENT SPECIFICATION

(11) **EP 3 171 593 B1**
(45) Date of publication and mention of the grant of the patent: **25.03.2020**
(21) Application number: 15203058.1
(22) Date of filing: 30.12.2015
(51) Int. Cl.: H04N 17/00, H04N 17/04, G11B 27/10, G11B 27/36, G11B 27/30

(54) **TESTING SYSTEM AND METHOD**
TESTSYSTEM UND TESTVERFAHREN
SYSTÈME DE TEST ET PROCÉDÉ DE TEST

(30) Priority: 23.11.2015 US 201514949789
(43) Date of publication of application: 24.05.2017
(73) Proprietor: Rohde & Schwarz GmbH & Co. KG, 81671 München (DE)
(72) Inventor: AUMER, Felix, 80335 München (DE); DURAI, Rajashekar, 509735 Singapore (SG); BACOR, Gerson, 486041 Singapore (SG); TAY, ChunGuan, 753503 Singapore (SG); SCHMITT, Fernando, 81671 München (DE)
(74) Representative: Isarpatent

(56) References cited:
- EP-A1- 0 888 019
- US-A1- 2007 223 874
- US-A1- 2011 263 243
- US-A1- 2014 267 561
- US-A1- 2015 062 353

## Description

### TECHNICAL FIELD

The invention relates to a testing system and a testing method.

### BACKGROUND

Although applicable to any system that reproduces audio and video data, the present invention will primarily be described in combination with mobile phones or smartphones.

On modern electronic devices like smartphones or smart TVs a plurality of applications and background tasks can be running. Such applications and background tasks reduce the free resources e.g. of a respective processor.

Furthermore, every time more complex and computational intensive encoding algorithms are used to encode videos of higher and higher resolutions as effectively as possible. Decoding such a video requires a high amount of processing power.

Therefore, it has to be ensured that audio and video data of a video can be synchronously reproduced by a specific device, even if applications or background tasks are running on the device.

Currently, there are no measuring systems available which can be used to easily identify an asynchrony between audio frames and video frames, when reproduced e.g. on a smartphone.

Document US 2015 / 0 062 353 A1 discloses a method for determining the synchronization between audio and video of reproduced audio-video content. Document US 2011 / 0 263 243 A1 discloses a system for determining the quality of audiovisual services of a mobile telephone. Document US 2007 / 0 223 874 A1 discloses how to synchronize visual and aural output via a feedback process. Document EP 0 888 019 A1 discloses a method for measuring the quality of a video transmission. US 2014/0267561 A1 relates to an external roundtrip latency measurement for a communication system.

Accordingly, there is a need for measuring asynchrony between audio and video frames of a video, when the video is reproduced.

### SUMMARY

This problem is solved by a testing system with the features of claim 1, and a testing method with the features of claim 9.

The present invention is based on the conclusion that testing video reproduction and audio reproduction separately doesn't allow testing synchrony of a video.

Therefore, the present invention uses this knowledge and uses a specifically prepared data source, which comprises audio and video data for simultaneous reproduction. The audio frames and the video frames both comprise unique marks, which allow unambiguously identifying every single audio frame and video frame.

Therefore, the audio and video data, e.g. a video file, is reproduced on e.g. a smartphone and the output, visual and audible, of the smartphone is recorded. The recorded data can then be analysed for synchrony of the audio and video data reproduced by the smartphone.

To analyse synchrony the test processor can extract the unique marks from the recorded audio stream and the recorded video stream and test if an audio frame and a video frame recorded at the same time comprise the right marks. The term "right marks" refers to two marks, which identify an audio frame and a video frame, which on the data source form a pair, i.e. should be reproduced simultaneously by the smartphone. If an audio frame and a video frame recorded at the same time do not comprise the right marks, the displacement between two simultaneous audio frames and a video frames can be determined.

Summing up, with the present invention only a simple video has to be reproduced on the video and audio reproduction system with specifically prepared audio and video frames, which can be recorded and analysed accordingly. The present invention, therefore, allows testing synchrony in playback of a video on a video and audio reproduction system with very little effort.

Further embodiments of the present invention are subject of the further subclaims and of the following description, referring to the drawings.

The recording unit comprises a video recording unit, like a camera or a barcode scanner, which records the unique marks in the video frames, and an audio recording unit, like a microphone, which records the unique marks in the audio frames. In an embodiment, the recording unit can be the smartphone, on which the video and audio data is reproduced. That means that the smartphone under test at the same time is part of the testing unit. The displayed video can e.g. be recorded with the smartphone's camera using a mirror or the like. The test processor can in this case e.g. be part of a smartphone app that runs on the smartphone.

In a possible embodiment, the unique marks in the video frames can comprise an optical code, especially a barcode or a QR code, comprising a unique identification number for said video frame. Such optical codes can be analysed and evaluated efficiently, because they have been specifically designed for visual evaluation.

According to the invention, an audio frame is an audio sequence with the length of a respective video frame. The unique marks in the audio frames comprise a sinusoidal sound wave of a respective frequency. The audio stream can therefore also be called a single tone signal, wherein the frequency changes over time. It is to be understood, that the term audio frame does not necessarily mean that a single audio stream is provided for every frame. The term frame simply refers to a section in an audio stream, which is timely related to a single video frame. The duration of a single audio frame is therefore defined by 1/fps, where fps is the frame rate of the video data. If a single audio frame comprises only the unique mark, i.e. a sinusoidal sound wave of a given frequency, this unique mark can be evaluated very efficiently, because no disturbances overlay the mark.

The frequencies of the sinusoidal sound waves range from a minimum frequency, especially 1000Hz, to a maximum frequency, especially 20000Hz. The given frequencies are only examples. It is to be understood, that any other frequency range can be used instead.

The frequencies of the sinusoidal sound waves of two consecutive audio frames are spaced apart by a first threshold value, especially by 1000Hz. That means, that e.g. the mark of a first audio frame has a frequency of 1000Hz, of a second audio frame a frequency of 2000Hz and so on. This allows easily distinguishing the audio marks. The frequency of the audio frames therefore instead of increasing continuously increases in a step-like pattern.

The frequencies of the sinusoidal sound waves sequentially increase by the first threshold value until the maximum frequency is reached and then fall back to the minimum frequency plus a second threshold value, especially 20Hz. These frequencies from the minimum to the maximum frequency can also be called one frequency sequence. The second threshold value increases with every repetition of the frequency sequence by its starting value, e.g. 20Hz. That means that a mark in a first audio frame of a first frequency sequence can e.g. have a frequency 1000Hz, and a mark in a first audio frame of a second frequency sequence can e.g. have a frequency 1020Hz.

Using the first threshold value and the second threshold value in the frequency sequences provides marks with a huge distance in frequency in consecutive frames and at the same time allows uniquely identifying a high number of different frames in the given frequency range.

In a possible embodiment, to extract the respective frequency from an audio frame the test processor is configured to perform a Short-Time-Fourier transformation of the recorded audio stream. The length of the time windows used for the Short-Time-Fourier transformation can be smaller than the length of the audio frames and video frames. The window size can e.g. be 220 samples at a sampling rate of 44,1kHz. The Overlap between two windows can e.g. be 176 samples. This configuration allows a time resolution of about 1ms for the frequency data.

In a possible embodiment, the test processor can be configured to analyse the time difference between a video frame and the according audio frame based on the results of the Short-Time-Fourier transformation by comparing the mark of the video frame with the frequency that results from the Short-Time-Fourier transformation for the audio frame which was recorded simultaneously with the respective video frame.

To make the comparison simpler, the marks of the video frames can comprise the frequency of the respective audio frame as a digital number.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of an embodiment of a testing system according to an embodiment of the present invention;
- Fig. 2: shows a flow diagram of a testing method according to the present invention;
- Fig. 3: shows a diagram of video and audio data according to the present invention; and
- Fig. 4: shows a block diagram of an embodiment of a testing system according to an embodiment of the present invention.

In the figures like reference signs denote like elements unless stated otherwise.

### DETAILED DESCRIPTION OF THE DRAWINGS

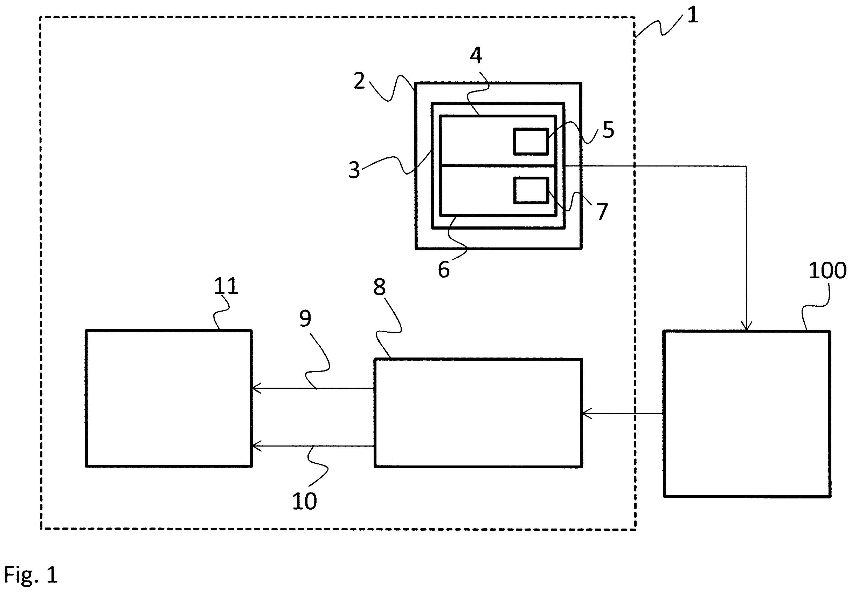

In Fig. 1 the testing system 1 comprises a data source 2, which provides video and audio data 3 to a video and audio reproduction system 100. In the video and audio data 3 single video frames 4 and audio frames 6 are provided each with a unique mark 5, 7. Note that although only one video frame 4 and only one audio frame 6 are shown in Fig. 1, any number of audio frames and video frames is possible. The unique marks 5 in the video frames 4 can be any type of visible code, but codes, which can easily be machine-evaluated, are preferred. Such codes can e.g. comprise barcodes, QR-codes or the like. The unique marks 7 in the audio frames 6 are sounds of a single frequency that varies for every audio frame, like e.g. a sinusoidal 1000Hz wave or the like.

In order to distinguish the single audio frames 6, the frequency of the unique marks 7 varies for every frame by a predetermined first threshold. The first threshold can e.g. be 1000Hz. That means that for every consecutive frame the frequency of the unique mark 7 is incremented by 1000Hz or 1kHz. Following this scheme would lead to frequencies, which cannot be reproduced or recorded any more. Therefore, a minimum and a maximum frequency are specified. The minimum frequency can be 1000Hz, i.e. 1kHz, and the maximum frequency can be 20000Hz, i.e. 20kHz. These frequency values are mere examples. Any other frequencies can be used, which can be reproduced by the video and audio reproduction system 100 and can be recorded by a respective recording unit 8.

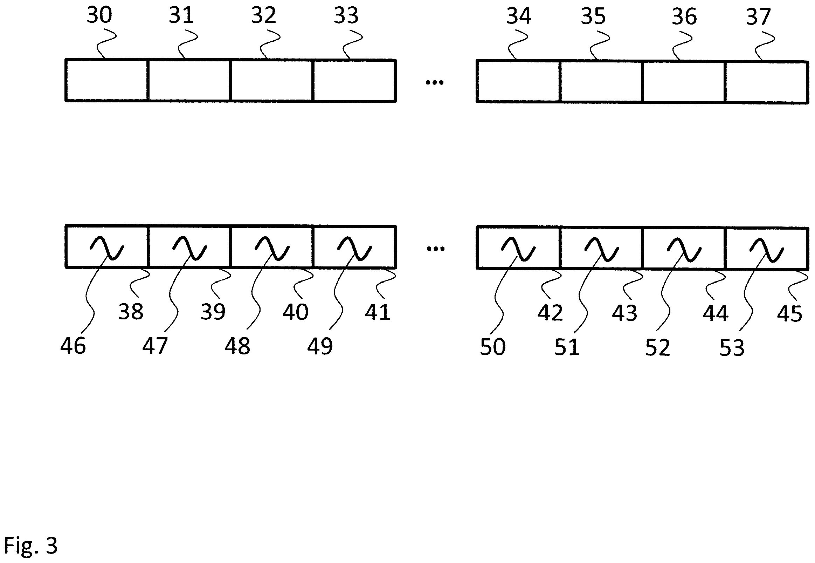

The above scheme leads to twenty different frequencies, i.e. twenty different unique marks 7 in the frequency range from 1000Hz to 20000Hz. After reaching 20000Hz, the frequencies of the marks start over from the minimum frequency. In order to further distinguish the single audio frames 6, in a repetition of the frequency range or scale, in every repetition a second threshold value is added to the single frequencies. The second threshold value can e.g. be 20Hz. Therefore, if the frequency of the first mark 7 is 1000Hz, the frequency of the 21^{st} mark 7 would be 1020Hz. Furthermore, the frequency of the 20^{th} mark 7 would be 20000Hz, and the frequency of the 40^{th} mark 7 would be 20020Hz. In the next repetition the second threshold would be incremented by its' initial value, i.e. 20Hz. Therefore, in the second repetition the respective frequencies would be 1040Hz, and 20040Hz. This is further specified in Fig. 3 and the respective description.

The video and audio reproduction system 100 can be any type of display combined with speakers, like e.g. a television set, a smartphone, a pc or the like.

The data source 2 can e.g. be provided as a data file on a USB stick or a memory card, which is inserted in the respective video and audio reproduction system 100. As an alternative, the data source 2 can e.g. comprise a streaming server, which provides the video and audio data 3 via a wired or wireless network connection to the video and audio reproduction system 100.

While the video and audio reproduction system 100 reproduces the video and audio data 3 a recording unit 8 records the video and the audio, which is reproduced by the video and audio reproduction system 100. The recording unit 8 provides respective video streams 9 and audio streams 10 to the test processor 11. The test processor 11 analyses the video streams 9 and audio streams 10 regarding synchrony by evaluating the single unique marks 5, 7 of video frames 4 and audio frames 6 in the video streams 9 and audio streams 10.

In order to analyse the single marks 5 of the video stream 9, the test processor 11 can simply decode the respective code, if this is not already done by the recording unit 8, like e.g. in the case of a barcode scanner.

The analysis of the single marks 7 of the audio stream 10 requires a little more effort. In order to extract the frequency of the marks 7 the test processor 11 performs a Short-Time-Fourier transformation of the recorded audio stream 10. Just as an example the length of the time windows used for the Short-Time-Fourier transformation can be 220 samples at a sample rate of 44.1kHz with an overlap of the windows of 176 samples.

The unique marks 5 in the video frames 4 can e.g. comprise in text form the frequency of the respective audio frame. Therefore, by simply looking for every video frame 4 or every unique mark 5 for the correct mark 7 and comparing the time when the video frame was recorded with the time when the mark 7 was recorded, allows determining the displacement between audio and video reproduction in the video and audio reproduction system 100.

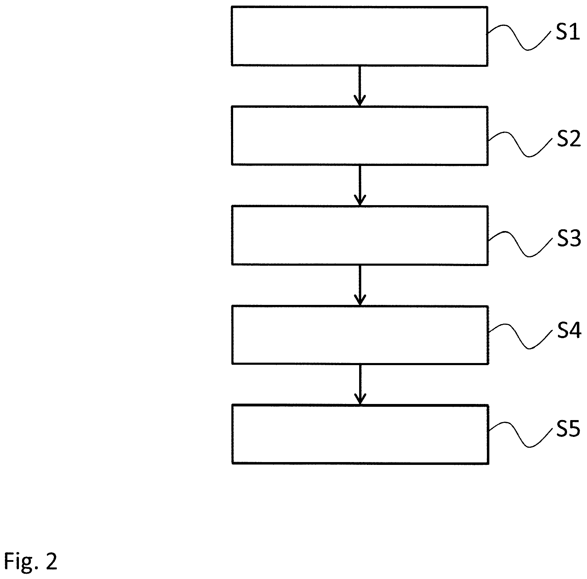

Fig. 2 shows a flow diagram of a testing method for a video and audio reproduction system 100, 101.

As a basis for measuring asynchrony between video and audio reproduction in the video and audio reproduction system 100, 101, the method comprises providing S1 a data source 2 with video and audio data 3, 61. The video and audio data 3, 61 comprises unique marks 5, 65 - 67, 7, 46 - 53, 71 - 73 in every video frame 4, 30 - 37, 62 - 64 and every audio frame 6, 38 - 45, 68 - 70. Further the video and audio data 3, 61 is reproduced S2 with the video and audio reproduction system 100, 101.

In order to determine the asynchrony, a video stream 9 and an audio stream 10 generated by the video and audio reproduction system 100, 101 based on the video and audio data 3, 61 are recorded, S3. Further, the unique marks 5, 65 - 67, 7, 46 - 53, 71 - 73 are extracted S4 from the recorded video stream 9 and the recorded audio stream 10.

Finally, asynchrony between video and audio reproduction in the video and audio reproduction system 100 is determined by verifying S5 if respective unique marks 5, 65 - 67, 7, 46 - 53, 71 - 73 of simultaneous video frames 4, 30 - 37, 62 - 64 and audio frames 6, 38 - 45, 68 - 70 have been recorded by the recording device 8, 74 simultaneously. Any asynchrony can then be determined via the displacement between respective unique marks 5, 65 - 67, 7, 46 - 53, 71 - 73 of simultaneous video frames 4, 30 - 37, 62 - 64 and audio frames 6, 38 - 45, 68 - 70.

The unique marks 5, 65 - 67 in the video frames 4, 30 - 37, 62 - 64 can be provided as an optical code, especially a barcode or a QR code, comprising a unique identification number for said video frame 4, 30 - 37, 62 - 64.

Further, an audio frame 6, 38 - 45, 68 - 70 is provided as an audio sequence with the length of a respective video frame 4, 30 - 37, 62 - 64, and the unique marks 7, 46 - 53, 71 - 73 in the audio frames 6, 38 - 45, 68 - 70 are provided as an audio code, i.e. a sinusoidal sound wave of a respective frequency.

The frequencies of the sinusoidal sound waves range from a minimum frequency to a maximum frequency, and the frequencies of the sinusoidal sound waves of two consecutive audio frames 6, 38 - 45, 68 - 70 are spaced apart by a first threshold value.

Further, the frequencies of the sinusoidal sound waves are sequentially increased by the first threshold value until the maximum frequency is reached and then are reverted to the minimum frequency plus a second threshold value wherein the second threshold value increases with every repetition of the frequency sequence by its starting value.

During the verifying S5 in order to extract the respective frequency from an audio frame 6, 38 - 45, 68 - 70 a Short-Time-Fourier transformation of the recorded audio stream 10 is performed. The length of the time windows used for the Short-Time-Fourier transformation is smaller than the length of the audio frames 6, 38 - 45, 68 - 70 and video frames 4, 30 - 37, 62 - 64. Finally, the time difference between a video frame 4, 30 - 37, 62 - 64 and the according audio frame 6, 38 - 45, 68 - 70 is analysed based on the results of the Short-Time-Fourier transformation.

Fig. 3 shows a diagram of video and audio data 3.

The video frames 30 to 37 each comprise a (not shown) unique visible mark, like a barcode. At the same time, every one of the audio frames 38 to 45 comprises a respective unique mark 46 to 53.

In the testing system 1, 60 the marks of the video frames 30 to 37 and the marks 46 to 53 of the audio frames 38 to 45 are related to each other. The relation can e.g. be established by the marks of the video frames 30 to 37 comprising a text representation of the frequencies of the respective marks 46 to 53 of the audio frames 38 to 45. Alternatively a table or any other form of relation database can be provided, where marks of the video frames 30 to 37 and the marks 46 to 53 of the audio frames 38 to 45 are linked to each other.

The following table shows a possible frequency distribution for the marks 46 to 53.

| **Code** | **Frequency** |
|---|---|
| 1000 | 1000 |
| 1001 | 2000 |
| 1002 | 3000 |
| . . . | . . . |
| 1019 | 19000 |
| 1020 | 1020 |
| 1021 | 2020 |
| 1022 | 3020 |

The scheme of the above table ensures that the neighbouring frequencies differ at least by 1000Hz and close tones (Δf = 20Hz) are spaced apart by 20 frames in time. For example the frame with ID 1000 is assigned the frequency of f1=1000Hz. The following ID 1001 does not use a frequency of 1020Hz, but of 2000Hz instead. In this way the frequency is increased by 1000Hz until it reaches the maximum value (in this case 19000Hz). Then the frequency falls back to the initial 1000Hz plus 20Hz, i.e. 1020Hz. In the next iteration the frequencies start from 1040Hz, and so on.

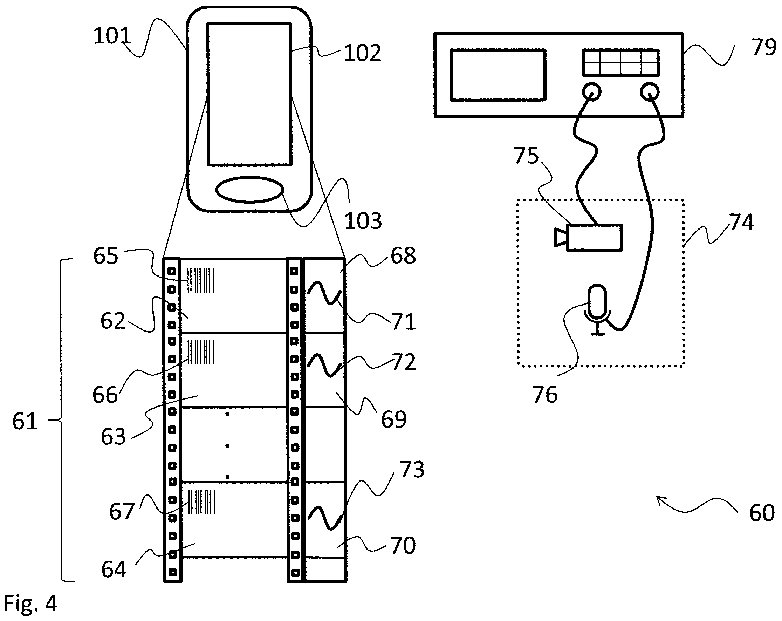

Fig. 4 shows a testing system 60, which uses a test rig 79 as test processor and a camera 75 together with a microphone 76 in the recording unit 74 to record the video and audio, which is reproduced by the smartphone 101 via the screen 102 and the speaker 103.

In Fig. 4 the smartphone 101 plays a video file 61, which was previously copied into the memory of the smartphone 101. As an alternative the smartphone 101 could receive the video file 61 from the test rig 79 or any other server via a wireless or wired network connection or via a USB device, which could e.g. be coupled to the smartphone via an OTG connector.

The video file comprises video frames 62 to 64, which each comprise barcodes 65 to 67 as unique marks. Further an audio stream with audio frames 68 to 70 is provided in the video file 61. Every audio frame has a single frequency sound 71 to 73 as unique mark.

In Fig. 4 a dedicated test rig 79 is used to evaluate the synchrony between playback of the video frames 62 to 64 and the audio frames 68 to 70.

As an alternative the smartphone 101 itself could be used for this evaluation. For example an application could be installed on the smartphone 101, which initiates reproduction of the video and at the same time records the audio and video reproduced by the smartphone 101 in an internal memory of the smartphone. The analysis of the barcodes 65 to 67 and the single frequency sounds 71 to 73 can be performed while recording is active or after recording has finished.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

### List of reference signs

- 1, 60: testing system
- 2: data source
- 3, 61: video and audio data
- 4, 30 - 37, 62 - 64: video frame
- 5, 65 - 67: unique mark
- 6, 38 - 45, 68 - 70: audio frame
- 7, 46 - 53, 71 - 73: unique mark
- 8, 74: recording unit
- 9: video stream
- 10: audio stream
- 11, 79: test processor
- 75: video recording unit
- 76: audio recording unit
- 100, 101: video and audio reproduction system
- 102: screen
- 103: speaker

- S1 - S5: method steps

## Claims

1. Testing system (1, 60) for a video and audio reproduction system (100, 101), comprising:
a data source (2) with video and audio data (3, 61) for reproduction by the video and audio reproduction system (100, 101), the video and audio data (3, 61) comprising unique marks (5, 65 - 67, 7, 46 - 53, 71 - 73) in every video frame (4, 30 - 37, 62 - 64) and every audio frame (6, 38 - 45, 68 - 70) ;
a recording unit (8, 74), configured to record a video stream (9) and an audio stream (10) generated by the video and audio reproduction system (100, 101) by reproducing the video and audio data (3, 61); and
a test processor (11, 79), configured to extract the unique marks (5, 65 - 67, 7, 46 - 53, 71 - 73) from the recorded video stream (9) and the recorded audio stream (10), and to verify if respective unique marks (5, 65 - 67, 7, 46 - 53, 71 - 73) of simultaneous video frames (4, 30 - 37, 62 - 64) and audio frames (6, 38 - 45, 68 - 70) have been recorded by the recording unit (8, 74) simultaneously;
wherein an audio frame (6, 38 - 45, 68 - 70) is an audio sequence with the length of a respective video frame (4, 30 - 37, 62 - 64) and the unique marks (7, 46 - 53, 71 - 73) in the audio frames (6, 38 - 45, 68 - 70) comprise a sinusoidal sound wave of a respective frequency;
wherein the frequencies of the sinusoidal sound waves range from a minimum frequency to a maximum frequency;
wherein the frequencies of the sinusoidal sound waves of two consecutive audio frames (6, 38 - 45, 68 - 70) are spaced apart by a first threshold value;
wherein the frequencies of the sinusoidal sound waves increase sequentially by the first threshold value until the maximum frequency is reached and then fall back to the minimum frequency plus a second threshold value, and wherein the second threshold value increases with every repetition of the frequency sequence by its starting value.

2. Testing system (1, 60) according to claim 1, wherein the recording unit (8, 74) comprises a video recording unit (75), which records the unique marks (5, 65 - 67) in the video frames (4, 30 - 37, 62 - 64), and an audio recording unit (76), which records the unique marks (7, 46 - 53, 71 - 73) in the audio frames (6, 38 - 45, 68 - 70).

3. Testing system (1, 60) according to any one of the preceding claims, wherein the unique marks (5, 65 - 67) in the video frames (4, 30 - 37, 62 - 64) comprise an optical code, especially a barcode or a QR code, comprising a unique identification number for said video frame (4, 30 - 37, 62 - 64).

4. Testing system (1, 60) according to any one of the preceding claims,
wherein the minimum frequency is 1000Hz, and the maximum frequency is 20000Hz.

5. Testing system (1, 60) according to any one of the preceding claims, wherein the first threshold value is at least 1000Hz.

6. Testing system (1, 60) according to any one of the preceding claims, wherein the second threshold value is 20Hz.

7. Testing system (1, 60) according to any one of the preceding claims, wherein to extract the respective frequency from an audio frame (6, 38 - 45, 68 - 70) the test processor (11, 79) is configured to perform a Short-Time-Fourier transformation of the recorded audio stream (10), where the length of the time windows used for the Short-Time-Fourier transformation is smaller than length of the audio frames (6, 38 - 45, 68 - 70) and video frames (4, 30 - 37, 62 - 64).

8. Testing system (1, 60) according to claim 7, wherein the test processor (11, 79) is configured to analyse the time difference between a video frame (4, 30 - 37, 62 - 64) and the according audio frame (6, 38 - 45, 68 - 70) based on the results of the Short-Time-Fourier transformation.

9. Testing method for a video and audio reproduction system (100, 101), the method comprising:
providing (S1) a data source (2) comprising video and audio data (3, 61), the video and audio data (3, 61) comprising unique marks (5, 65 - 67, 7, 46 - 53, 71 - 73) in every video frame (4, 30 - 37, 62 - 64) and every audio frame (6, 38 - 45, 68 - 70) ;
reproducing (S2) the video and audio data (3, 61) with the video and audio reproduction system (100, 101),
recording (S3) a video stream (9) and an audio stream (10) generated by the video and audio reproduction system (100, 101) by said step of reproducing (S2) the video and audio data (3, 61);
extracting (S4) the unique marks (5, 65 - 67, 7, 46 - 53, 71 - 73) from the recorded video stream (9) and the recorded audio stream (10); and
verifying (S5) if respective unique marks (5, 65 - 67, 7, 46 - 53, 71 - 73) of simultaneous video frames (4, 30 - 37, 62 - 64) and audio frames (6, 38 - 45, 68 - 70) have been recorded by the recording device (8, 74) simultaneously;
wherein an audio frame (6, 38 - 45, 68 - 70) is an audio sequence with the length of a respective video frame (4, 30 - 37, 62 - 64) and the unique marks (7, 46 - 53, 71 - 73) in the audio frames (6, 38 - 45, 68 - 70) comprise a sinusoidal sound wave of a respective frequency;
wherein the frequencies of the sinusoidal sound waves range from a minimum frequency to a maximum frequency;
wherein the frequencies of the sinusoidal sound waves of two consecutive audio frames (6, 38 - 45, 68 - 70) are spaced apart by a first threshold value;
wherein the frequencies of the sinusoidal sound waves sequentially increase by the first threshold value until the maximum frequency is reached and then fall back to the minimum frequency plus a second threshold value, and wherein the second threshold value increases with every repetition of the frequency sequence by its starting value.

10. Testing method according to claim 9, wherein the unique marks (5, 65 - 67) in the video frames (4, 30 - 37, 62 - 64) comprise an optical code, especially a barcode or a QR code, comprising a unique identification number for said video frame (4, 30 - 37, 62 - 64) .

11. Testing method according to claims 9 or 10, wherein to extract the respective frequency from an audio frame (6, 38 - 45, 68 - 70) a Short-Time-Fourier transformation of the recorded audio stream (10) is performed, where the length of the time windows used for the Short-Time-Fourier transformation is smaller than the length of the audio frames (6, 38 - 45, 68 - 70) and video frames (4, 30 - 37, 62 - 64), and especially wherein the time difference between a video frame (4, 30 - 37, 62 - 64) and the according audio frame (6, 38 - 45, 68 - 70) is analysed based on the results of the Short-Time-Fourier transformation.

## Patentansprüche

1. Testsystem (1, 60) für ein Video- und Audiowiedergabesystem (100, 101), umfassend:
eine Datenquelle (2) mit Video- und Audiodaten (3, 61) zur Wiedergabe durch das Video- und Audiowiedergabesystem (100, 101), wobei die Video- und Audiodaten (3, 61) eindeutige Kennzeichnungen (5, 65-67, 7, 46-53, 71-73) in jedem Videoframe (4, 30-37, 62-64) und jedem Audioframe (6, 38-45, 68-70) umfassen;
eine Aufzeichnungseinheit (8, 74), die eingerichtet ist, um einen Videostrom (9) und einen Audiostrom (10) aufzuzeichnen, die durch das Video- und Audiowiedergabesystem (100, 101) durch Wiedergeben der Video- und Audiodaten (3, 61) erzeugt werden; und
einen Testprozessor (11, 79), der eingerichtet ist, um die eindeutigen Kennzeichnungen (5, 65-67, 7, 46-53, 71-73) aus dem aufgezeichneten Videostrom (9) und dem aufgezeichneten Audiostrom (10) zu extrahieren und um zu überprüfen, ob jeweilige eindeutige Kennzeichnungen (5, 65-67, 7, 46-53, 71-73) von gleichzeitigen Videoframes (4, 30-37, 62-64) und Audioframes (6, 38-45, 68-70) durch die Aufzeichnungseinheit (8, 74) gleichzeitig aufgezeichnet wurden;
wobei ein Audioframe (6, 38-45, 68-70) eine Audiosequenz mit der Länge eines jeweiligen Videoframes (4, 30-37, 62-64) ist und die eindeutigen Kennzeichnungen (7, 46-53, 71-73) in den Audioframes (6, 38-45, 68-70) eine sinusförmige Schallwelle einer jeweiligen Frequenz umfassen;
wobei die Frequenzen der sinusförmigen Schallwellen von einer minimalen Frequenz zu einer maximalen Frequenz reichen;
wobei die Frequenzen der sinusförmigen Schallwellen von zwei aufeinanderfolgenden Audioframes (6, 38-45, 68-70) um einen ersten Schwellenwert beabstandet sind;
wobei die Frequenzen der sinusförmigen Schallwellen sequentiell um den ersten Schwellenwert ansteigen, bis die maximale Frequenz erreicht ist, und dann auf die minimale Frequenz plus einen zweiten Schwellenwert zurückfallen, und wobei der zweite Schwellenwert mit jeder Wiederholung der Frequenzsequenz um seinen Ausgangswert ansteigt.

2. Testsystem (1, 60) nach Anspruch 1, wobei die Aufzeichnungseinheit (8, 74) eine Videoaufzeichnungseinheit (75), welche die eindeutigen Kennzeichnungen (5, 65-67) in den Videoframes (4, 30-37, 62-64) aufzeichnet, und eine Audioaufzeichnungseinheit (76), welche die eindeutigen Kennzeichnungen (7, 46-53, 71-73) in den Audioframes (6, 38-45, 68-70) aufzeichnet, umfasst.

3. Testsystem (1, 60) nach einem der vorhergehenden Ansprüche, wobei die eindeutigen Kennzeichnungen (5, 65-67) in den Videoframes (4, 30-37, 62-64) einen optischen Code umfassen, insbesondere einen Strichcode oder einen QR-Code, der eine eindeutige Identifikationsnummer für den Videoframe (4, 30-37, 62-64) umfasst.

4. Testsystem (1, 60) nach einem der vorhergehenden Ansprüche, wobei die minimale Frequenz 1000 Hz beträgt und die maximale Frequenz 20000 Hz beträgt.

5. Testsystem (1, 60) nach einem der vorhergehenden Ansprüche, wobei der erste Schwellenwert mindestens 1000 Hz beträgt.

6. Testsystem (1, 60) nach einem der vorhergehenden Ansprüche, wobei der zweite Schwellenwert 20 Hz beträgt.

7. Testsystem (1, 60) nach einem der vorhergehenden Ansprüche, wobei, um die jeweilige Frequenz aus einem Audioframe (6, 38-45, 68-70) zu extrahieren, der Testprozessor (11, 79) eingerichtet ist, um eine Kurzzeit-Fourier-Transformation des aufgezeichneten Audiostroms (10) durchzuführen, wobei die Länge der Zeitfenster, die für die Kurzzeit-Fourier-Transformation verwendet werden, kleiner ist als eine Länge der Audioframes (6, 38-45, 68-70) und Videoframes (4, 30-37, 62-64) .

8. Testsystem (1, 60) nach Anspruch 7, wobei der Testprozessor (11, 79) eingerichtet ist, um die Zeitdifferenz zwischen einem Videoframe (4, 30-37, 62-64) und dem entsprechenden Audioframe (6, 38-45, 68-70) basierend auf den Ergebnissen der Kurzzeit-Fourier-Transformation zu analysieren.

9. Testverfahren für ein Video- und Audiowiedergabesystem (100, 101), wobei das Verfahren Folgendes umfasst:
Bereitstellen (S1) einer Datenquelle (2), umfassend Video-und Audiodaten (3, 61), wobei die Video- und Audiodaten (3, 61) eindeutige Kennzeichnungen (5, 65-67, 7, 46-53, 71-73) in jedem Videoframe (4, 30-37, 62-64) und jedem Audioframe (6, 38-45, 68-70) umfassen;
Wiedergeben (S2) der Video- und Audiodaten (3, 61) mit dem Video- und Audiowiedergabesystem (100, 101),
Aufzeichnen (S3) eines Videostroms (9) und eines Audiostroms (10), die durch das Video- und Audiowiedergabesystem (100, 101) durch den Schritt zum Wiedergeben (S2) der Video- und Audiodaten (3, 61) erzeugt werden;
Extrahieren (S4) der eindeutigen Kennzeichnungen (5, 65-67, 7, 46-53, 71-73) aus dem aufgezeichneten Videostrom (9) und dem aufgezeichneten Audiostrom (10); und
Überprüfen (S5), ob jeweilige eindeutige Kennzeichnungen (5, 65-67, 7, 46-53, 71-73) von gleichzeitigen Videoframes (4, 30-37, 62-64) und Audioframes (6, 38-45, 68-70) durch die Aufzeichnungsvorrichtung (8, 74) gleichzeitig aufgezeichnet wurden;
wobei ein Audioframe (6, 38-45, 68-70) eine Audiosequenz mit der Länge eines jeweiligen Videoframes (4, 30-37, 62-64) ist und die eindeutigen Kennzeichnungen (7, 46-53, 71-73) in den Audioframes (6, 38-45, 68-70) eine sinusförmige Schallwelle einer jeweiligen Frequenz umfassen;
wobei die Frequenzen der sinusförmigen Schallwellen von einer minimalen Frequenz zu einer maximalen Frequenz reichen;
wobei die Frequenzen der sinusförmigen Schallwellen von zwei aufeinanderfolgenden Audioframes (6, 38-45, 68-70) um einen ersten Schwellenwert beabstandet sind;
wobei die Frequenzen der sinusförmigen Schallwellen sequentiell um den ersten Schwellenwert ansteigen, bis die maximale Frequenz erreicht ist, und dann auf die minimale Frequenz plus einen zweiten Schwellenwert zurückfallen, und wobei der zweite Schwellenwert mit jeder Wiederholung der Frequenzsequenz um seinen Ausgangswert ansteigt.

10. Testverfahren nach einem der Anspruch 9, wobei die eindeutigen Kennzeichnungen (5, 65-67) in den Videoframes (4, 30-37, 62-64) einen optischen Code umfassen, insbesondere einen Strichcode oder einen QR-Code, der eine eindeutige Identifikationsnummer für den Videoframe (4, 30-37, 62-64) umfasst.

11. Testverfahren nach Anspruch 9 oder 10, wobei, um die jeweilige Frequenz aus einem Audioframe (6, 38-45, 68-70) zu extrahieren, eine Kurzzeit-Fourier-Transformation des aufgezeichneten Audiostroms (10) durchgeführt wird, wobei die Länge der Zeitfenster, die für die Kurzzeit-Fourier-Transformation verwendet werden, kleiner ist als die Länge der Audioframes (6, 38-45, 68-70) und Videoframes (4, 30-37, 62-64), und wobei insbesondere die Zeitdifferenz zwischen einem Videoframe (4, 30-37, 62-64) und dem entsprechenden Audioframe (6, 38-45, 68-70) basierend auf den Ergebnissen der Kurzzeit-Fourier-Transformation analysiert wird.

## Revendications

1. Système d'essai (1, 60) pour un système de reproduction vidéo et audio (100, 101), comprenant :
une source de données (2) avec des données vidéo et audio (3, 61) pour une reproduction par le système de reproduction vidéo et audio (100, 101), les données vidéo et audio (3, 61) comprenant des repères uniques (5, 65 à 67, 7, 46 à 53, 71 à 73) dans chaque trame vidéo (4, 30 à 37, 62 à 64) et chaque trame audio (6, 38 à 45, 68 à 70) ;
une unité d'enregistrement (8, 74), configurée pour enregistrer un flux vidéo (9) et un flux audio (10) générés par le système de reproduction vidéo et audio (100, 101) en reproduisant les données vidéo et audio (3, 61) ; et
un processeur d'essai (11, 79), configuré pour extraire les repères uniques (5, 65 à 67, 7, 46 à 53, 71 à 73) du flux vidéo (9) enregistré et du flux audio (10) enregistré,
et pour vérifier si des repères uniques (5, 65 à 67, 7, 46 à 53, 71 à 73) respectifs de trames vidéo (4, 30 à 37, 62 à 64) et de trames audio (6, 38 à 45, 68 à 70) simultanées ont été enregistrés simultanément par l'unité d'enregistrement (8, 74) ;
dans lequel une trame audio (6, 38 à 45, 68 à 70) est une séquence audio avec la longueur d'une trame vidéo (4, 30 à 37, 62 à 64) respective et les repères uniques (7, 46 à 53, 71 à 73) dans les trames audio (6, 38 à 45, 68 à 70) comprennent une onde sonore sinusoïdale d'une fréquence respective ;
dans lequel les fréquences des ondes sonores sinusoïdales varient d'une fréquence minimale à une fréquence maximale ;
dans lequel les fréquences des ondes sonores sinusoïdales de deux trames audio consécutives (6, 38 à 45, 68 à 70) sont espacées d'une première valeur seuil ;
dans lequel les fréquences des ondes sonores sinusoïdales augmentent séquentiellement de la première valeur seuil jusqu'à ce que la fréquence maximale soit atteinte puis retombent à la fréquence minimale plus une seconde valeur seuil, et dans lequel la seconde valeur seuil augmente à chaque répétition de la séquence de fréquence de sa valeur de démarrage.

2. Système d'essai (1, 60) selon la revendication 1, dans lequel l'unité d'enregistrement (8, 74) comprend une unité d'enregistrement vidéo (75), qui enregistre les repères uniques (5, 65 à 67) dans les trames vidéo (4, 30 à 37, 62 à 64), et une unité d'enregistrement audio (76), qui enregistre les repères uniques (7, 46 à 53, 71 à 73) dans les trames audio (6, 38 à 45, 68 à 70).

3. Système d'essai (1, 60) selon l'une quelconque des revendications précédentes, dans lequel les repères uniques (5, 65 à 67) dans les trames vidéo (4, 30 à 37, 62 à 64) comprennent un code optique, notamment un code-barres ou un code QR, comprenant un numéro d'identification unique pour ladite trame vidéo (4, 30 à 37, 62 à 64).

4. Système d'essai (1, 60) selon l'une quelconque des revendications précédentes,
dans lequel la fréquence minimale est de 1000 Hz, et la fréquence maximale est de 20 000 Hz.

5. Système d'essai (1, 60) selon l'une quelconque des revendications précédentes, dans lequel la première valeur seuil est d'au moins 1000 Hz.

6. Système d'essai (1, 60) selon l'une quelconque des revendications précédentes, dans lequel la seconde valeur seuil est de 20 Hz.

7. Système d'essai (1, 60) selon l'une quelconque des revendications précédentes, dans lequel pour extraire la fréquence respective d'une trame audio (6, 38 à 45, 68 à 70), le processeur d'essai (11, 79) est configuré pour réaliser une transformation de Fourier à court terme du flux audio (10) enregistré, où la longueur des fenêtres de temps utilisées pour la transformation de Fourier à court terme est plus petite qu'une longueur des trames audio (6, 38 à 45, 68 à 70) et des trames vidéo (4, 30 à 37, 62 à 64).

8. Système d'essai (1, 60) selon la revendication 7, dans lequel le processeur d'essai (11, 79) est configuré pour analyser la différence de temps entre une trame vidéo (4, 30 à 37, 62 à 64) et la trame audio (6, 38 à 45, 68 à 70) correspondante d'après les résultats de la transformation de Fourier à court terme.

9. Procédé d'essai pour un système de reproduction vidéo et audio (100, 101), le procédé comprenant :
la fourniture (S1) d'une source de données (2) comprenant des données vidéo et audio (3, 61), les données vidéo et audio (3, 61) comprenant des repères uniques (5, 65 à 67, 7, 46 à 53, 71 à 73) dans chaque trame vidéo (4, 30 à 37, 62 à 64) et chaque trame audio (6, 38 à 45, 68 à 70) ;
la reproduction (S2) des données vidéo et audio (3, 61) avec le système de reproduction vidéo et audio (100, 101),
l'enregistrement (S3) d'un flux vidéo (9) et d'un flux audio (10) générés par le système de reproduction vidéo et audio (100, 101) par ladite étape de reproduction (S2) des données vidéo et audio (3, 61) ;
l'extraction (S4) des repères uniques (5, 65 à 67, 7, 46 à 53, 71 à 73) du flux vidéo (9) enregistré et du flux audio (10) enregistré ; et
la vérification (S5) si des repères uniques (5, 65 à 67, 7, 46 à 53, 71 à 73) respectifs de trames vidéo (4, 30 à 37, 62 à 64) et de trames audio (6, 38 à 45, 68 à 70) simultanées ont été enregistrés simultanément par le dispositif d'enregistrement (8, 74) ;
dans lequel une trame audio (6, 38 à 45, 68 à 70) est une séquence audio avec la longueur d'une trame vidéo (4, 30 à 37, 62 à 64) respective et les repères uniques (7, 46 à 53, 71 à 73) dans les trames audio (6, 38 à 45, 68 à 70) comprennent une onde sonore sinusoïdale d'une fréquence respective ;
dans lequel les fréquences des ondes sonores sinusoïdales varient d'une fréquence minimale à une fréquence maximale ;
dans lequel les fréquences des ondes sonores sinusoïdales de deux trames audio consécutives (6, 38 à 45, 68 à 70) sont espacées d'une première valeur seuil ;
dans lequel les fréquences des ondes sonores sinusoïdales augmentent séquentiellement de la première valeur seuil jusqu'à ce que la fréquence maximale soit atteinte puis retombent à la fréquence minimale plus une seconde valeur seuil, et dans lequel la seconde valeur seuil augmente à chaque répétition de la séquence de fréquence de sa valeur de démarrage.

10. Procédé d'essai selon la revendication 9, dans lequel les repères uniques (5, 65 à 67) dans les trames vidéo (4, 30 à 37, 62 à 64) comprennent un code optique, notamment un code-barres ou un code QR, comprenant un numéro d'identification unique pour ladite trame vidéo (4, 30 à 37, 62 à 64).

11. Procédé d'essai selon les revendications 9 ou 10, dans lequel pour extraire la fréquence respective d'une trame audio (6, 38 à 45, 68 à 70), une transformation de Fourier à court terme du flux audio (10) enregistré est réalisée, où la longueur des fenêtres de temps utilisées pour la transformation de Fourier à court terme est plus petite que la longueur des trames audio (6, 38 à 45, 68 à 70) et des trames vidéo (4, 30 à 37, 62 à 64), et notamment dans lequel la différence de temps entre une trame vidéo (4, 30 à 37, 62 à 64) et la trame audio (6, 38 à 45, 68 à 70) correspondante est analysée d'après les résultats de la transformation de Fourier à court terme.
